# EUROPEAN PATENT SPECIFICATION

(11) **EP 2 021 300 B1**
(45) Date of publication and mention of the grant of the patent: **12.10.2016**
(21) Application number: 07729435.3
(22) Date of filing: 23.05.2007
(51) Int. Cl.: C04B 28/02, C04B 40/02

(54) **METHOD FOR MANUFACTURING AGGLOMERATED CEMENT ARTICLES AND RESULTANT ARTICLES**
VERFAHREN ZUR HERSTELLUNG VON AGGLOMERIERTEN ZEMENTARTIKELN UND RESULTIERENDE ARTIKEL
PROCÉDÉ DE FABRICATION D'ARTICLES EN CIMENT AGGLOMÉRÉ, ET ARTICLES RÉSULTANTS

(30) Priority: 24.05.2006 IT TV20060087
(43) Date of publication of application: 11.02.2009
(73) Proprietor: Toncelli, Luca, 36061 Bassano del Grappa (Vicenza) (IT)
(72) Inventor: Toncelli, Luca, 36061 Bassano del Grappa (Vicenza) (IT)
(74) Representative: Dragotti, Gianfranco
(86) International application number: PCT/EP2007/054997
(87) International publication number: WO 2007/135168

(56) References cited:
- WO-A-97/27982
- WO-A-2005/049293
- WO-A-2006/048350
- WO-A-2006/079585
- US-A- 6 030 447
- US-A1- 2004 261 666
- US-A1- 2005 045 069
- US-A1- 2005 058 817

## Description

The present invention relates to the manufacture of agglomerated cement articles and more particularly to a method for manufacturing articles in the form of slabs or tiles from a mix consisting of granulated stone material or the like and a cement binder.

For some years a method for manufacturing cement articles in the form of tiles of the aforementioned type has been known, this method also being known by the generic name of Terastone technology, described and claimed in the patent IT-A-1,288,569 and in the corresponding patent US-A-6,355,191, filed in the name of Marcello Toncelli.

Said method envisages the preparation of a starting mix substantially consisting of a granulated aggregate of inert material with a predetermined and controlled particle size and a cement binder substantially consisting of Portland cement and water in a predetermined ratio as well as a fluidifier (an additive which is known per se for cement mixes) in such a quantity to determine well-defined characteristics assessed by means of the so-called mini-slump test) of the binder, said mix containing a quantity of cement binder slightly in excess of the volume of voids in the granulated material.

The starting mix is distributed inside a mould with the desired thickness, following which it is exposed to a very pronounced vacuum for a very short period of time (in the region of no more than 20 seconds) so as to perform a substantially complete deaeration of the interstitial cavities present in the mix.

The next step in the known method envisages applying to the deaerated layer a vibratory movement of predefined frequency under a vacuum less pronounced than in the deaeration step and for a duration of at least 60 seconds, following which the rough-formed tile is transferred for the conventional steps of setting and hardening the cement binder.

For more details regarding the method, reference should be made to the detailed description of the abovementioned patents.

The setting and hardening steps have a duration which is compatible and consistent with the nature of the cement binder, said duration for the setting step and an initial hardening being in the region of 24 hours, whereas for complete hardening the duration is about 28 days.

In the general technology relating to the manufacture of cement articles for a long time it has been known to use autoclave heating in order to shorten considerably the hardening time (which is normally regarded as being 28 days), said treatment consisting in introducing the rough-formed article into an autoclave and heating it in an environment saturated with steam under the corresponding equilibrium pressure (which can be determined by means of the Mollier diagram) so as to prevent the water contained in the article from boiling and therefore evaporating, which would adversely affect the integrity of the article and would actually prevent the completion of the reactions which accompany the hardening step.

This treatment has not been widely used, mainly due to the fact that, with the increase in the dimensions of the articles, it becomes necessary to provide large-size autoclaves having an obviously high cost which is not correspondingly offset in terms of the added value of the resultant article.

A requirement of Terastone technology is to improve the chemical/physical and mechanical characteristics of the resultant articles.

WO 2006/048350 discloses a method for manufacturing cement articles, whereby aggregates are mixed with a cement paste, wherein the cement is replaced with 5 to 15 % of metakaolin or silica fume.

A current limitation of Terastone technology - one which mainly affects the visual appearance of the articles - is the impossibility of using granulated stone materials with particles of maximum dimensions smaller than 4 mm in order to prevent the formation of microfissures associated with the characteristics of the cement paste utilized in the article. Therefore, another requirement of Terastone technology is the reduction of the dimensions of the particles of granulated materials utilized in the article so as to improve the visual appearance thereof.

Surprisingly, it has been found that, by applying to the Terastone method the autoclave treatment of the rough-formed article in an environment saturated with steam at high values of temperature (160-180 °C) and pressure (6-12 bar) and at the same time replacing the Portland cement in the initial mix by high-reactivity metakaolin in a percentage of between 15 and 35% by volume, not only are the hardening times reduced to a few hours, but a substantial improvement in the characteristics of the resultant article also is obtained. Preferably the percentage of metakaolin is of between 20 and 30% by volume.

Example of formulation (volume percentages):

| | |
|---|---|
| - 525 Portland cement | 17 % |
| - High-reactivity metakaolin | 3 % |
| - Water with fluidifier | 20 % |
| - Granulated stone 0.3 to 1.3 mm on Bolomey scale | 60 % |

The article was hardened inside the mould for 24 hours and then introduced into an autoclave where the following cycle takes place :
- heating the article within 4 hours up to 170°C
- maintaining the article at 170°C for 6 hours
- cooling the article to room temperature within 2 hours.

After cooling, the article showed the following peculiar characteristics:

| | |
|---|---|
| - flexural/tensile strength | 18 Mpa |
| - water absorption by weight | 1.8% |
| - hydraulic shrinkage | 0.25 mm/m |

It should be mentioned that an identical article made exclusively with 525 Portland cement (20% by volume) cured at room temperature for 28 days showed the following characteristics:

| | |
|---|---|
| - flexural/tensile strength | 14 Mpa |
| - water absorption by weight | 4.2% |
| - hydraulic shrinkage | 0.40 mm/m |

Without imposing undue limitations to the present invention, it seems plausible that the high temperature (associated with the high pressure) of the autoclave treatment causes particular pozzolanic reactions between the calcium oxide in the Portland cement and the metakaolin, leading to the formation of particular hydration crystals which are exceptionally strong and compact and providing in the article the above referred superior characteristics.

It was also observed that an article cured in an autoclave and subjected to 50 cycles between - 25°C and +40°C (with immersion in water) in a climatic cell did not show microfissures, while the corresponding article cured at room temperature for 28 days after 20 similar cycles in a climatic cell showed some microfissures. This indicates an excellent compactness and stability of the cement paste in the article cured in an autoclave.

The preceding description has been provided specifically in relation to a treatment in an autoclave, being understood as a process step in which the rough-formed article, at the end of the initial setting and hardening step, is exposed to the action of temperature and pressure of the above referred values.

## Claims

1. Method for manufacturing agglomerated cement articles, comprising the steps of:
(i) preparing a starting mix consisting of a granulated aggregate of inert material having a predetermined particle size below 4 mm and a cement binder substantially consisting of Portland cement replaced by high-reactivity metakaolin in a percentage amount of between 15 and 35% by volume of the cement binder, and water in a predetermined ratio as well as additives, said mix containing a quantity of cement binder slightly in excess of the volume of voids in the granulated material;
(ii) depositing the starting mix inside a mould with the desired thickness, following which it is exposed to a very pronounced vacuum for a period of time, in the region of no more than 20 seconds, so as to perform substantially complete deaeration of the interstitial cavities present in the mix;
(iii) applying to the deaerated layer a vibratory movement of predefined frequency under a vacuum less pronounced than in the previous deaeration step (ii) and for a duration of at least 60 seconds;
(iv) hardening of the cement binder of the rough-formed tile for about 24 hours so as to obtain a rough-formed article which is subsequently removed from the mould;
(v) the rough-formed article extracted from the mould being treated with saturated steam at a temperature, not less than 160 °C and at the corresponding pressure of saturated steam for a period of at least two hours.

2. Method for manufacturing agglomerated cement articles according to Claim 1, **characterized in that** the Portland cement forming part of the starting mix is replaced by high-reactivity metakaolin in a percentage amount of between 20 and 30% by volume.

3. Method for manufacturing agglomerated cement articles according to Claim 1, **characterized in that** said treatment of the rough-formed article is performed at a temperature of between 160 and 190°C and at a pressure of between 6 and 12 bar.

4. Method for manufacturing agglomerated cement articles according to Claim 1 or 3, **characterized in that** said treatment of the rough-formed article is performed in an autoclave.

5. Method for manufacturing agglomerated cement articles according to Claim 4, **characterized in that**, in said autoclave treatment, the exposure to high temperature has a duration of between 3 and 8 hours.

6. Method for manufacturing agglomerated cement articles according to Claim 4, **characterized in that**, in said autoclave treatment, the exposure to high temperature is preceded by a heating step of a duration from 2 to 5 hours and is followed by a cooling step of a duration from 0.5 to 4 hours.

7. Agglomerated cement article which can be obtained with the method of each of the preceding claims.

## Patentansprüche

1. Verfahren zur Herstellung von agglomerierten Zementartikeln, umfassend die folgenden Schritte:
(i) Herstellung einer Startmischung, die aus einem eine vorbestimmte Partikelgröße von unter 4 mm aufweisenden granulierten Aggregat aus Inertmaterial und einem Zementbinder, der hauptsächlich aus Portland-Zement besteht und in einer prozentualen Menge von zwischen 15 und 35 Volumen-% des Zementbinders durch hochreaktives Metakaolin ersetzt ist und Wasser in einem vorbestimmten Verhältnis sowie Additiven besteht, wobei die Mischung eine Menge an Zementbinder aufweist, welche geringfügig im Überschuss gegenüber des Volumens von Leerräumen im granulierten Material ist;
(ii) Einbringen der Startmischung in eine Form mit der gewünschten Dicke, gefolgt davon, dass sie für eine bestimmte Zeit im Bereich von nicht mehr als 20 Sekunden einem sehr ausgeprägtem Vakuum ausgesetzt wird, um eine im Wesentlichen vollständige Entlüftung der interstitiellen Hohlräume, die in der Mischung vorhanden sind, durchzuführen;
(iii) Anwenden einer Vibrationsbewegung auf die entlüftete Schicht mit vorbestimmter Frequenz unter einem Vakuum, welches weniger ausgeprägt ist als im vorhergehenden Entlüftungsschritt (ii) für eine Dauer von 60 Sekunden;
(iv) Härten des Zementbinders der roh-geformten Fliese für ungefähr 24 Stunden, um einen roh-geformten Artikel zu erhalten, welcher im Folgenden aus der Form entfernt wird;
(v) wobei der roh-geformte Artikel, welcher aus der Form entfernt wurde, mit gesättigtem Dampf bei einer Temperatur von nicht weniger als 160 °C und bei entsprechendem Druck von gesättigten Dampf für eine Zeitspanne von mindestens 2 Stunden behandelt wird.

2. Verfahren zur Herstellung von agglomerierten Zementartikeln gemäß Anspruch 1, **dadurch gekennzeichnet, dass** der Portland-Zement, welcher einen Teil der Startmischung bildet, durch hochreaktives Metakaolin in einer prozentualen Menge von zwischen 20 und 30 Volumen-% ersetzt wird.

3. Verfahren zur Herstellung von agglomerierten Zementartikeln gemäß Anspruch 1, **dadurch gekennzeichnet, dass** die Behandlung des roh-geformten Artikels bei einer Temperatur von zwischen 160 und 190 °C und bei einem Druck von zwischen 6 und 12 bar durchgeführt wird.

4. Verfahren zur Herstellung von agglomerierten Zementartikeln gemäß Anspruch 1 oder 3, **dadurch gekennzeichnet, dass** die Behandlung des roh-geformten Artikels in einer Autoklave durchgeführt wird.

5. Verfahren zur Herstellung von agglomerierten Zementartikeln gemäß Anspruch 4, **dadurch gekennzeichnet, dass** das Aussetzen einer hohen Temperatur in der Autoklavenbehandlung eine Dauer von zwischen 3 und 8 Stunden aufweist.

6. Verfahren zur Herstellung von agglomerierten Zementartikeln gemäß Anspruch 4, **dadurch gekennzeichnet, dass** in der Autoklavenbehandlung dem Aussetzen einer hohen Temperatur ein Heizschritt von einer Dauer von 2 bis 5 Stunden vorhergeht, und ein Kühlschritt einer Dauer von 0,5 bis 4 Stunden folgt.

7. Agglomerierter Zementartikel, welcher durch das Verfahren eines jeden der vorhergehenden Ansprüche erhalten werden kann.

## Revendications

1. Procédé de fabrication d'articles en ciment aggloméré comprenant les étapes suivantes :
(i) préparation d'un mélange de départ constitué d'un agrégat granuleux d'un matériau inerte présentant une taille de particules prédéterminée inférieure à 4 mm et d'un liant de ciment essentiellement constitué de ciment Portland remplacé par du méta-kaolin avec un pourcentage entre 15 et 35 % en volume du liant de ciment, et d'eau dans une proportion prédéterminée en que d'additifs, ledit mélange contenant une quantité de liant de ciment légèrement supérieure au volume des vides dans le matériau granuleux ;
(ii) dépôt du mélange de départ à l'intérieur d'un moule avec l'épaisseur souhaitée, à la suite de quoi il est exposé à un vide très poussé pendant une période non supérieure à 20 secondes, de façon à effectuer une désaération globalement complète des cavités interstitielles présentes dans le mélange ;
(iii) application à la couche désaérée d'un mouvement vibratoire d'une fréquence prédéterminée sous un vide moins poussé que dans l'étape de désaération précédente (ii) et pendant une durée d'au moins 60 secondes ;
(iv) durcissement du liant de ciment de la tuile brute pendant environ 24 heures de façon à obtenir un article brut qui est ensuite retiré du moule ;
(v) l'article brut extrait du moule étant traité avec de la vapeur saturée à une température non inférieure à 160 °C et à la pression correspondante de la vapeur saturée pendant une période d'au moins deux heures.

2. Procédé de fabrication d'articles en ciment aggloméré selon la revendication 1, **caractérisé en ce que** le ciment Portland qui fait partie du mélange de départ est remplacé par du méta-kaolin à haute réactivité avec un pourcentage entre 20 et 30 % en volume.

3. Procédé de fabrication d'articles en ciment aggloméré selon la revendication 1, **caractérisé en ce que** ledit traitement de l'article brut est effectué à une température entre 160 et 190 °C et à une pression entre 6 et 12 bar.

4. Procédé de fabrication d'articles en ciment aggloméré selon la revendication 1 ou 3, **caractérisé en ce que** ledit traitement de l'article brut est effectué dans un autoclave.

5. Procédé de fabrication d'articles en ciment aggloméré selon la revendication 4, **caractérisé en ce que**, dans ledit traitement en autoclave, l'exposition à une haute température a une durée entre 3 et 8 heures.

6. Procédé de fabrication d'articles en ciment aggloméré selon la revendication 4, **caractérisé en ce que**, dans ledit traitement en autoclave, l'exposition à une haute température est précédée d'une étape de chauffage d'une durée de 2 à 5 heures et est suivie d'une étape de refroidissement d'une durée de 0,5 à 4 heures.

7. Article en ciment aggloméré pouvant être obtenu avec le procédé selon chacune des revendications précédentes.
